# EUROPÄISCHE PATENTSCHRIFT

(11) **EP 0 613 911 B1**
(45) Veröffentlichungstag und Bekanntmachung des Hinweises auf die Patenterteilung: **08.09.1999**
(21) Anmeldenummer: 94102201.4
(22) Anmeldetag: 12.02.1994
(51) Int. Cl.: C08F 10/00, C08F 4/78

(54) **Modifizierte geträgerte Chromocen-Katalysatorsysteme**
Modified supported chromocene catalysts
Catalyseur supporté et modifié à base de chromocène

(30) Priorität: 27.02.1993 DE 4306105
(43) Veröffentlichungstag der Anmeldung: 07.09.1994
(73) Patentinhaber: BASF Aktiengesellschaft, 67063 Ludwigshafen (DE)
(72) Erfinder: Rohde, Wolfgang, Dr., D-67346 Speyer (DE)

(56) Entgegenhaltungen:
- US-A- 3 976 632
- US-A- 4 015 059
- US-A- 4 297 460
- US-A- 4 619 980
- US-A- 5 071 812

## Beschreibung

Die vorliegende Erfindung betrifft modifizierte geträgerte Chromocen-Katalysatorsysteme, erhältlich durch

Zugabe eines Oxidationsmittels zu einem geträgerten Chromocen-Katalysator
und anschließender Zugabe eines Reduktionsmittels.

Weiterhin betrifft die Erfindung Verfahren zur Herstellung derartiger modifizierter geträgerter Chromocen-Katalysatorsysteme, deren Verwendung zur Herstellung von Polyalk-l-enen sowie Verfahren zur Herstellung von Polyalk-l-enen mit Hilfe dieser modifizierten geträgerten Chromocen-Katalysatorsysteme.

Technische Verfahren zur Polymerisation von Alk-l-enen beruhen im wesentlichen auf zwei verschiedenen Katalysatorfamilien, den Phillips- und den Ziegler-Katalysatoren. Die spezifischen Unterschiede hinsichtlich Zusammensetzung und Wirkung dieser Katalysatorsysteme sind aus der Literatur hinlänglich bekannt. Eine Zwischenposition nehmen Katalysatorsysteme auf der Basis chromorganischer Verbindungen wie Chromocen (vgl. US-Patent 3 709 853) ein. Diese Systeme ähneln in ihrer Zusammensetzung den Phillips-Katalysatoren, in ihrem Polymerisationsverhalten dagegen den Ziegler-Systemen. Diese Katalysatoren sind ohne Cokatalysatoren verwendbar, sind allerdings sehr hydrolyse- und oxidationsempfindlich. Durch Oxidation bei hohen Temperaturen in sauerstoffhaltiger Atmosphäre lassen sich Katalysatoren auf der Basis chromorganischer Verbindungen in Phillips-Katalysatoren überführen (vgl. DE-A 27 42 543).

Ähnlich lassen sich kieselgelgeträgerte Bisarenchrom-Komplexe mit Sauerstoff bei Raumtemperatur oxidieren, wobei ebenfalls Systeme erhalten werden, die den Phillips-Katalysatoren sehr ähnlich sind (vgl. US-Patente 4 00l 196 und 3 976 632).

Die EP-A 0 090 374 beschreibt einen Katalysator aus Bis-(cyclopentadienyl)chrom (II) auf einem phosphathaltigem Träger und einem Organometall-Cokatalysator.

Die genannten Katalysatorsysteme auf der Basis chromorganischer Verbindungen, insbesondere des Chromocens, sind Oxidationsempfindlich und entsprechend schwer handhabbar. Überdies weisen die damit hergestellten Polymerisate enge Molmassenverteilungen auf. Die durch Oxidation solcher Katalysatoren erhaltenen Katalysatorsysteme vom Phillips-Typ sind zwar weniger oxidationsempfindlich, aber auch mit diesen Katalysatoren sind nur mäßig breite Molmassenverteilungen erhältlich.

Aufgabe der vorliegenden Erfindung war es daher, geträgerte Chromocen-Katalysatorsysteme zur Verfügung zu stellen, die die genannten Nachteile nicht aufweisen.

Demgemäß wurden die eingangs definierten modifizierten geträgerten Chromocen-Katalysatorsysteme gefunden.

Außerdem wurden Verfahren zur Herstellung derartiger modifizierter geträgerter Chromocen-Katalysatorsysteme, deren Verwendung zur Herstellung von Polyalk-l-enen sowie Verfahren zur Herstellung von Polyalk-l-enen mit Hilfe dieser modifizierten geträgerten Chromocen-Katalysatorysteme gefunden.

Unter der Bezeichnung Chromocen-Katalysator werden hier nicht nur Verbindungen der Formel Cp₂Cr, in der Cp eine unsubstituierte Cyclopentadienyl-Einheit darstellt, verstanden, sondern auch solche, in denen die Cyclopentadienyl-Einheiten ein- bis fünffach durch C₁- bis C₁₀-Alkylgruppen, 5- bis 7-gliedrige Cycloalkylgruppen oder C₆- bis C₁₅-Arylgruppen substituiert sein kann sowie Verbindungen, in denen das Cr-Atom mit Fluorenyl- oder Indenylgruppen, welche ebenfalls mit C₁- bis C₁₀-Alkylgruppen substituiert sein können, verbunden ist. Bevorzugt wird jedoch Cp₂Cr eingesetzt, in der Cp eine unsubstituierte Cyclopentadienyl-Einheit bedeutet.

Als Trägermaterialien werden vorzugsweise feinteilige Träger eingesetzt, die bevorzugt einen Teilchendurchmesser im Bereich von 1 bis 300 µm aufweisen, insbesondere von 30 bis 70 µm. Geeignete Trägermaterialien sind beispielsweise Kieselgele, bevorzugt solche der Formel SiO₂ · a Al₂O₃ , worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Verfahren zur Herstellung von geträgerten Chromocen-Katalysatoren sind an sich bekannt und beispielsweise in der US-A 3 709 853 beschrieben. Üblicherweise wird ein in einem Temperaturbereich von 200 bis 900°C unter Inertgasatmosphäre calciniertes Trägermaterial suspendiert und mit einer Lösung des entsprechenden Chromocens versetzt. Die Menge an Chrom beträgt hierbei 0,1 bis 10 Gew.-%, bezogen auf das Trägermaterial.

Als Oxidationsmittel eignen sich Metallverbindungen von Metallen der I., VII. oder VIII. Nebengruppe des Periodensystems oder Sauerstoff oder Luft.

Es werden bevorzugt Verbindungen der Metalle Mn, Re, Fe, Co, Ni oder Cu eingesetzt, insbesondere Fe- und Mn-Verbindungen. Es können auch Mischungen verschiedener Metallverbindungen verwendet werden. Geeignet sind oxidierend wirkende Metallverbindungen, die in organischen Lösungsmitteln löslich sind, aber nicht selbst polymerisationsaktiv sind.

Als Metallverbindungen eignen sich Metalloxoverbindungen wie Manganate oder Rhenate, Metallsalze mit anorganischen Anionen wie Nitrat, Halogenide, Sulfat, Phosphat, Tetrafluoroborat oder Hexafluorophosphat, vorzugsweise Nitrat und Halogenide, oder Metallsalze mit organischen Anionen wie Alkoholate, vorzugsweise mit 1 bis 20 C-Atomen, Carboxylate, vorzugsweise mit 10 bis 20 C-Atomen, und Acetylacetonat, aber auch C₁- bis C₁₀-Alkylreste und Cyclopentadienylreste, welche gegebenenfalls l- bis 5-fach mit C₁-bis C₁₀-Alkylresten substituiert sein können. Gut geeignet sind auch Koordinationsverbindungen der genannten Metalle, welche anorganische oder organische Neutralliganden wie Ammoniak oder Amine, beispielsweise Ethylendiamin, enthalten. Selbstverständlich können auch Mischungen verschiedener Metallverbindungen eingesetzt werden.

Besonders bevorzugt werden als Oxidationsmittel Sauerstoff und Luft eingesetzt.

Bei einem bevorzugten Verfahren geht man so vor, daß das geträgerte Chromocen-Katalysatorsystem bei Temperaturen von 0 bis 500°C, vorzugsweise von 20 bis 30°C, über einen Zeitraum von 1 bis 60 Minuten, vorzugsweise von 1 bis 10 Minuten, mit dem Oxidationsmittel in Kontakt gebracht wird.

Werden Metallverbindungen als Oxidationsmittel verwendet, so können diese auch als Lösung eingesetzt werden, wobei als Lösungsmittel Kohlenwasserstoffe und Ether, vorzugsweise C₅- bis C₁₀-Alkane verwendet werden.

Das Molverhältnis zwischen der als Oxidationsmittel verwendeten Metallverbindung und dem auf dem Träger gebundenen Chrom beträgt hierbei 0,1:1 bis 10:1, insbesondere 0,2:1 bis 1:1.

Werden als Oxidationsmittel Sauerstoff oder Luft eingesetzt, wird ein Molverhältnis von Sauerstoff zu Chrom von mindestens 0,1:1 bis 1:1 eingestellt. Die Anwendung eines Sauerstoffüberschusses ist aber prinzipiell unkritisch. An der Trägeroberfläche adsorbierter Sauerstoff kann gegebenenfalls durch Spülen mit Inertgas wie beispielweise Stickstoff oder Argon entfernt werden.

Die so erhaltenen Katalysatorvorstufen können bei Temperaturen im Bereich von 0 bis 500°C, vorzugsweise bei Raumtemperatur im Vakuum über einen Zeitraum von 1 bis 24 Stunden, vorzugsweise 1 bis 5 Stunden, getrocknet und unter Inertgasatmosphäre, vorzugsweise unter Argonatmosphäre, gelagert werden. Die Lagerung kann unbegrenzt erfolgen.

Anschließend werden zu den so erhaltenen Katalysatorvorstufen Reduktionsmittel gegeben. Als Reduktionsmittel eignen sich Hydride- oder organische Verbindungen von Metallen der 1. oder 2. Hauptgruppe des Periodensystems oder von Bor, Aluminium, Silicium oder Zinn. Es können auch Mischungen verschiedener Reduktionsmittel eingesetzt werden. Bevorzugt sind Verbindungen von Aluminium. Als organische Reste eignen sich lineare und verzweigte C₁- bis C₁₀-Alkyle, Vinylverbindungen mit 2 bis 12 C-Atomen, Allylverbindungen mit 3 bis 13 C-Atomen, Dienylverbindungen mit 5 bis 15 C-Atomen, auch cyclische Dienylverbindungen mit 5 bis 8 C-Atomen sowie C₆- bis C₁₅-Aryle. Die Reduktionsmittel können auch verschiedene organische Reste enthalten, wobei ein Teil der organischen Reste auch durch Halogenide, insbesondere Chlorid, sowie durch Hydrid substituiert sein kann.

Bevorzugt sind lineare und verzweigte C₁- bis C₄-Alkyle, insbesondere Ethyl, iso-Propyl und n-Butyl sowie Pentadienyl und Cyclopentadienyl. Besonders bevorzugt werden Triethylaluminium, Tri-iso-propyl-aluminium, Aluminiumdiethylchlorid und n-Butyllithum eingesetzt.

Das Molverhältnis zwischen Reduktionsmittel und dem auf dem Träger gebundenen Chrom beträgt 0,1:1 bis 100:1, vorzugsweise 1:1 bis 10:1.

Die Umsetzung der Katalysatorvorstufen mit dem Reduktionsmittel kann bei Temperaturen im Bereich von -20 bis +150°C, insbesondere von 10 bis 110°C erfolgen.

Da sich die erfindungsgemäßen modifizierten geträgerten Chromocen-Katalysatorsysteme zur Polymerisation von Alk-l-enen eignen, kann die Umsetzung der Katalysatorvorstufen mit dem Reduktionsmittel auch im Polymerisationsreaktor erfolgen. Ein bevorzugtes Verfahren besteht darin, das Reduktionsmittel im Reaktor vorzulegen, das zu polymerisierende Alk-l-en hinzuzufügen und dann die oxidierten Katalysatorvorstufen hinzuzugeben. Die Reaktionsbedingungen richten sich hierbei nach dem jeweils verwendeten Polymerisationsverfahren.

Mit Hilfe dieser modifizierten geträgerten Chromocen-Katalysatorsysteme lassen sich Polymerisate von Alk-l-enen herstellen. Darunter werden Homo- und Copolymerisate- von C₂- bis C₁₀-Alkylenen verstanden, wobei als Monomere vorzugsweise Ethylen, Propylen, But-l-en, Pent-l-en und Hex-l-en verwendet werden.

Die Herstellung dieser Polymerisate kann in den üblichen für die Polymerisation von Alkenen verwendeten Reaktoren entweder diskontinuierlich oder bevorzugt kontinuierlich durchgeführt werden. Geeignete Reaktoren sind u.a. kontinuierlich betriebene Schleifenreaktoren oder Rührkessel, wobei man gegebenenfalls auch eine Reihe von mehreren hintereinander geschalteten Rührkesseln verwenden kann.

Die Polymerisationsbedingungen sind an sich unkritisch, Drücke von 1 bis 1.000 bar, bevorzugt 1 bis 100 bar, und Temperaturen von -50°C bis +300°C, bevorzugt 0 bis 150°C, haben sich als geeignet erwiesen.

Polymerisationsreaktionen mit Hilfe der erfindungsgemäßen Katalysatorsysteme lassen sich in der Gasphase, in einer Suspension, in flüssigen Monomeren und in inerten Lösungsmitteln durchführen. Als Suspensions- bzw. Lösungsmittel eignen sich Kohlenwasserstoffe, bevorzugt C₄ bis C₁₀-Alkane. Polymerisate mit guten anwendungstechnischen Eigenschaften sind auch bei der Polymerisation in der Gasphase, in einer Suspension und in flüssigen Monomeren erhältlich.

Die mittlere Molmasse der gebildeten Polymerisate kann mit den in der Polymerisationstechnik üblichen Methoden gesteuert werden, beispielsweise durch Zufuhr von Reglern wie Wasserstoff oder durch Veränderung der Reaktionstemperaturen. Durch Senkung der Reaktionstemperatur lassen sich Polymerisate mit erhöhten mittleren Molmassen herstellen.

Die erfindungsgemäßen modifizierten geträgerten Chromocen-Katalysatorsysteme zeichnen sich vor allem durch hohe Stabilität aus, die mit Hilfe der erfindungsgemäßen Katalysatorsysteme hergestellten Polymerisate zeigen insbesondere breite bis sehr breite Molmassenverteilungen und weisen hohe Dichtewerte auf.

### Beispiel 1

### Beispiele 1 bis 11

Herstellung von modifizierten geträgerten Chromocen-Katalysatorsystemen und Polymerisation von Ethylen
1. 21 g eines bei 600°C über 13 Stunden im Argonstrom calcinierten Kieselgels (SG 332 der Fa. Grace) wurden in 130 ml Heptan suspendiert. Anschließend wurde eine Lösung von 715 mg Chromocen (Cp₂Cr) in 20 ml Heptan innerhalb von 30 Minuten zu der Suspension gegeben und weitere 10 Minuten gerührt. Anschleßend wurde der so geträgerte Chromocen-Katalysator abfiltriert, mit Heptan gewaschen und 5 Stunden im Vakuum getrocknet.
2. 25 g des nach 1. erhaltenen Produkts wurden in einem Wirbelbett im trockenen Zuluftstrom (20 1/h) über einem Zeitraum von 5 Minuten oxidiert.
3. in einem 1 l-Autoklaven wurden verschiedene Metallalkyle vorgelegt, mit 500 ml Isobutan versetzt und auf 80°C erwärmt. Anschließend wurde Wasserstoff bis zu verschiedenen Partialdrücken und Ethylen bis zu einem Gesamtdruck von 40 bar aufgepreßt. Anschließend wurden verschiedene Mengen des nach 2. erhaltenen geträgerten Chromocen-Katalysators zugegeben. Nach einer Reaktionszeit von 90 Minuten wurde der Autoklav entspannt.

Über die Zusammensetzungen und Eigenschaften der Polyethylene gibt die Tabelle Aufschluß.

Die Grenzviskosität η wurde nach DIN 53 733 bestimmt. Der Gewichtsmittelwert M_{w} und der Zahlenmittelwert Mₙ wurden durch Gelpermeationschromatographie bestimmt.

Folgende Abkürzungen werden verwendet:
- Et: = Ethyl
- i-Pr: = iso-Propyl
- Bu: = n-Butyl

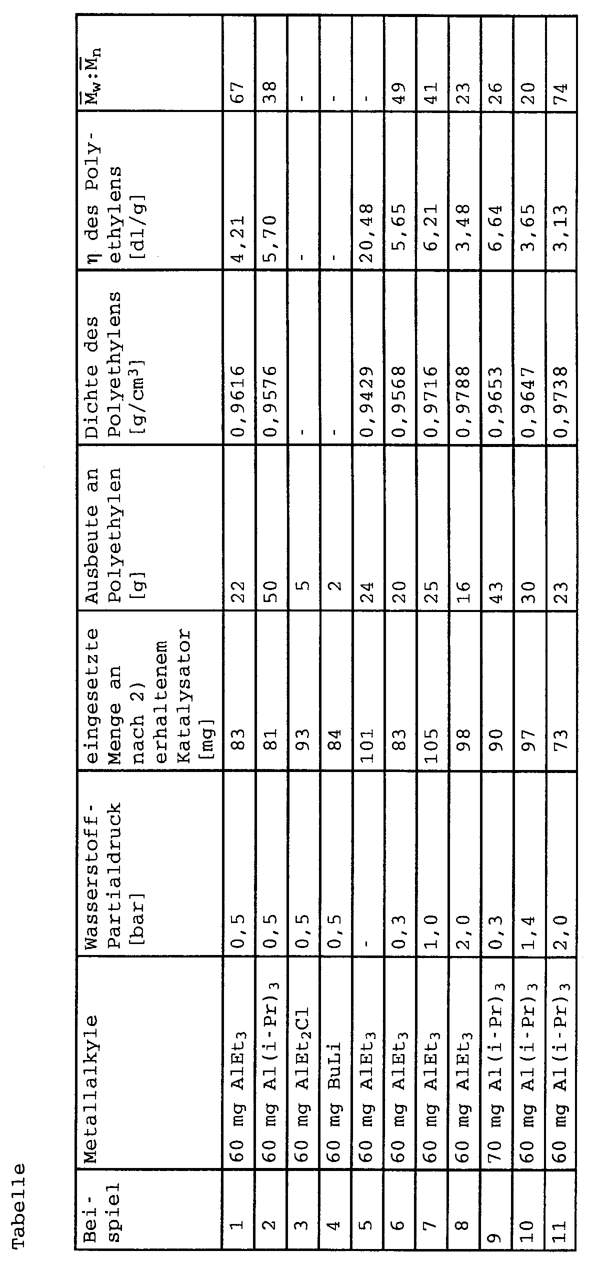

## Patentansprüche

1. Modifizierte geträgerte Chromocen-KatalysatorsySteme, erhältlich durch
Zugabe eines Oxidationsmittels zu einem geträgerten Chromocen-Katalysator
und anschließender Zugabe eines Reduktionsmittels.

2. Modifizierte geträgerte Chromocen-Katalysatorsysteme nach Anspruch 1, dadurch gekennzeichnet, daß als Oxidationsmittel Metallverbindungen von Metallen der I., VII. oder VIII. Nebengruppe des Periodensystems oder Sauerstoff oder Luft eingesetzt werden.

3. Modifizierte geträgerte Chromocen-Katalysatorsysteme nach den Ansprüchen 1 bis 2, dadurch gekennzeichnet, daß als Reduktionsmittel Hydride oder organische Verbindungen von Metallen der 1. oder 2. Hauptgruppe des Periodensystems oder von Bor, Aluminium, Silicium oder Zinn eingesetzt werden.

4. Verfahren zur Herstellung von modifizierten geträgerten Chromocen-Katalysatorsystemen, wobei man zu einem geträgerten Chromocen-Katalysator ein Oxidationsmittel und anschließend ein Reduktionsmittel zugibt.

5. Verwendung der modifizierten geträgerten Chromocen-Katalysatorsysteme gemäß den Ansprüchen 1 bis 3 zur Herstellung Von Polyalk-l-enen.

6. Verfahren zur Herstellung von Polyalk-l-enen bei Drücken von 1 bis 1.000 bar und Temperaturen von -50 bis +300°C mit Hilfe eines Katalysatorsystems, dadurch gekennzeichnet, daß man modifizierte geträgerte Chromocen-Katalysatorsysteme gemäß den Ansprüchen 1 bis 3 verwendet.

## Claims

1. A modified supported chromocene catalyst system obtainable by
addition of an oxidising agent to a supported chromocene catalyst
and subsequent addition of a reducing agent.

2. A modified supported chromocene catalyst system as claimed in claim 1, wherein the oxidizing agent used is a compound of a metal of transition group I, VII or VIII of the Periodic Table or oxygen or air.

3. A modified supported chromocene catalyst system as claimed in claim 1 or 2, wherein the reducing agent used is a hydride or organic compound of a metal of main group I or II of the Periodic Table or of boron, aluminum, silicon or tin.

4. A process for preparing a modified supported chromocene catalyst system, which comprises adding an oxidizing agent and subsequently a reducing agent to a supported chromocene catalyst.

5. The use of a modified supported chromocene catalyst system as claimed in any of claims 1 to 3 for preparing polyalk-1-enes.

6. A process for preparing polyalk-1-enes at from -50 to +300°C and a pressure of from 1 to 1000 bar using a modified supported chromocene catalyst system as claimed in any of claims 1 to 3.

## Revendications

1. Systèmes catalyseurs modifiés au chromocène sur support, qu'on obtient par addition d'un agent oxydant à un catalyseur au chromocène sur support, cette addition étant suivie de l'addition d'un agent réducteur.

2. Systèmes catalyseurs modifiés au chromocène sur support selon la revendication 1, caractérisés par le fait que l'on utilise, en tant qu'agents oxydants, des dérivés métalliques des métaux des sous-groupes I, VII ou VIII de la Classification Périodique, ou l'oxygène, ou l'air.

3. Systèmes catalyseurs modifiés au chromocène sur support selon les revendications 1 et 2 caractérisés par le fait que l'on utilise, en tant qu'agents réducteurs, des hydrures ou des dérivés organiques de métaux du premier ou du deuxième groupe principal de la Classification Périodique ou du bore, de l'aluminium, du silicium ou de l'étain.

4. Procédé pour la préparation des systèmes catalyseurs modifiés au chromocène sur support selon lequel, à un catalyseur au chromocène sur support, on ajoute un agent oxydant puis un agent réducteur.

5. Utilisation des systèmes catalyseurs modifiés au chromocène sur support selon les revendications 1 à 3 pour la préparation de polyalcènes-1.

6. Procédé pour la préparation de polyalcène-1 à des pressions de 1 à 1000 bar et des températures de -50 à +300°C à l'aide d'un système catalyseur, caractérisé par le fait que l'on utilise un système catalyseur modifié au chromocène sur support selon les revendications 1 à 3.
